# EUROPÄISCHE PATENTSCHRIFT

(11) **EP 3 634 901 B1**
(45) Veröffentlichungstag und Bekanntmachung des Hinweises auf die Patenterteilung: **28.07.2021**
(21) Anmeldenummer: 18728634.9
(22) Anmeldetag: 01.06.2018
(51) Int. Cl.: B66C 19/00, B66C 13/46

(54) **AUTOMATISCH GEFÜHRTES PORTALHUBGERÄT FÜR CONTAINER UND VERFAHREN ZUM BETRIEB EINES SOLCHEN PORTALHUBGERÄTS**
AUTOMATICALLY GUIDED LIFTING GANTRY DEVICE FOR CONTAINERS AND METHOD FOR OPERATING SUCH A LIFTING GANTRY DEVICE
DISPOSITIF DE LEVAGE DE PORTIQUE POUR CONTENEURS GUIDÉ AUTOMATIQUEMENT ET PROCÉDÉ DE FONCTIONNEMENT D'UN TEL DISPOSITIF DE LEVAGE DE PORTIQUE

(30) Priorität: 08.06.2017 DE 102017112661
(43) Veröffentlichungstag der Anmeldung: 15.04.2020
(73) Patentinhaber: Konecranes Global Corporation, 05830 Hyvinkää (FI)
(72) Erfinder: KLEMENT, Stefan, 97222 Rimpar (DE); BASELT, Daniel, 41352 Korschenbroich (DE); POLLAK VON EMHOFEN, Sascha, 50226 Frechen (DE)
(74) Vertreter: Moser Götze & Partner Patentanwälte mbB
(86) Internationale Anmeldenummer: PCT/EP2018/064508
(87) Internationale Veröffentlichungsnummer: WO 2018/224408

(56) Entgegenhaltungen:
- EP-A1- 2 974 992
- EP-A2- 2 060 472
- DE-A1-102006 044 187
- DE-A1-102007 046 287
- DE-A1-102015 117 417
- US-A- 6 081 292

## Beschreibung

Die Erfindung betrifft ein Portalhubgerät für Container, insbesondere nach Art eines Straddle Carriers oder Sprinter Carriers, das vier voneinander beabstandet angeordnete Portalstützen aufweist und über seine Räder flurgebunden und frei verfahrbar ist, mit einer Fahrzeugsteuerung, über die das Portalhubgerät automatisch steuerbar ist, und mit einem Sensorsystem, das ausgebildet und eingerichtet ist, um zur automatischen Steuerung des Portalhubgeräts Sensordaten von einer Umgebung des Portalhubgeräts zu ermitteln.

Auch betrifft die Erfindung ein Verfahren zum Betrieb eines solchen Portalhubgeräts.

Typische Einsatzgebiete von derartigen Portalhubgeräten sind der Umschlag sowie der Transport von Containern, insbesondere von genormten ISO-Containern oder standardisierten Containern, innerhalb von Terminals in See- oder Binnenhäfen oder in Terminals für den kombinierten Verkehr zwischen Straße und Schiene.

In diesem Zusammenhang werden unter ISO-Containern genormte Großraumbeziehungsweise Seefrachtcontainer verstanden, die im internationalen Warenverkehr zum Einsatz kommen. Am weitesten verbreitet sind ISO-Container mit einer Breite von 8 Fuß und einer Länge von 20, 40 oder 45 Fuß. Derartige Container weisen genormte Beschläge auf, die von als Spreader oder Spreaderrahmen bezeichneten Lastaufnahmemitteln beispielsweise eines Krans oder eines Portalhubgeräts gegriffen werden können. Insbesondere wenn die Beschläge bei 20 und 40 Fuß langen Containern an den Containerecken angeordnet sind, werden diese auch als Eckbeschläge oder Corner Castings bezeichnet. Auch gibt es Container mit einer standardisierten Länge von 53 Fuß, die bisher als standardisierte aber nicht ISO genormte Container ausschließlich in Nordamerika eingesetzt werden. Die Beschläge von Containern mit Längen von 40 und 53 Fuß sind nicht an den Containerecken, sondern an der Ober- und Unterseite jeweils zwischen den Ecken an einer Position angebracht, die der Position der Eckbeschläge von 40 Fuß langen ISO-Containern entspricht. Auch gibt es entsprechende Container in einer breiteren Variante, die auch als Wide Body Container bezeichnet werden.

Portalhubgeräte sind daher spezielle Schwerlastfahrzeuge, die auch als Portalhubwagen, Portalhubstapler, Portalstapler, Portalhubstapelwagen, Portalstapelwagen, Straddle Carrier, Van Carrier, Shuttle Carrier, Sprinter Carrier oder Runner bekannt sind. Durch ihren spinnenbeinartigen Aufbau, der vier in den Ecken eines gedachten Rechtecks angeordnete starre Portalstützen aufweist, können Portalhubgeräte einen auf dem Boden oder auf einem anderen Container ruhenden Container beziehungsweise eine Containerreihe der Länge nach überfahren und hierbei zusätzlich je nach Bauweise auch einen angehobenen Container transportieren. Je nach Bauhöhe werden die Portalhubgeräte beispielsweise als 1 über 3-Geräte, 1 über 2-Geräte usw. bezeichnet. Ein als 1 über 3-Gerät ausgebildeter Straddle Carrier kann kollisionsfrei über drei gestapelte Container mit einem aufgenommenen Container hinwegfahren, einen Container auf drei gestapelten Containern absetzen oder den obersten von vier gestapelten Containern aufnehmen und ist etwa 15 m hoch. 1 über 0-Geräte und 1 über 1-Geräte werden auch als Sprinter Carrier und Portalhubgeräte mit demgegenüber größerer Bauhöhe als Straddle Carrier bezeichnet. Mittels ihrer Hubvorrichtung ist ein als Spreader oder Spreaderrahmen bezeichnetes Lastaufnahmemittel heb- und senkbar, um Container an ihren Beschlägen greifen und somit aufnehmen, anheben und nach einem Transport an einem Zielort wieder abstellen zu können. Auch kann vorgesehen sein, dass das Lastaufnahmemittel beim Heben beziehungsweise Senken an den Portalstützen geführt ist.

Außerdem sind die Portalhubgeräte über Räder mit einer mit Luft oder Gasen befüllten Gummibereifung im Sinne von Pneus versehen und hierüber flurgebunden, aber nicht schienengebunden und somit frei verfahrbar. Dementsprechend sind die vorliegend betroffenen Portalhubgeräte von Schienenfahrzeugen und insbesondere von Eisenbahnwagons zu unterscheiden.

Die Portalhubgeräte können manuell von in einer Fahrerkabine mitfahrenden Bedienperson, halb-automatisch oder bei so genannten Automated Guided Vehicles (AGV) vollautomatisch und somit fahrerlos betrieben, das heißt gesteuert beziehungsweise geführt, werden. "Fahrerlos" bezieht sich hierbei lediglich auf das tatsächliche Eingreifen eines Fahrers in den Steuerungsvorgang. In diesem Sinne kann ein fahrerloser Automatik-Betrieb eines entsprechenden Portalhubgeräts auch dann gegeben sein, wenn ein Fahrer mitfährt, hierbei jedoch nicht aktiv in die Steuerung eingreift. Bei halb-automatischem Betrieb wird das Portalhubgerät in der Regel manuell gesteuert und zur Entlastung der Bedienperson lässt sich für einzelne Funktionen, beispielsweise die Lenkung, ein Automatik-Betrieb aktivieren.

Halb-automatische Portalhubgeräte der vorbeschriebenen Art sind bereits aus der EP 2 060 472 B1 bekannt. In diesem Dokument ist beschrieben, dass ein von einer mitfahrenden Bedienperson manuell steuerbares beziehungsweise führbares Portalhubgerät vorne und hinten an seinem Fahrwerkträger mit einem 2D-Laserscanner versehen sein kann. Mittels des 2D-Laserscanners kann eine Entfernung zu einer Containerwand gemessen werden. Unter Berücksichtigung der gemessenen Entfernung werden Lenkwinkel-Sollwerte für eine automatische Lenkung berechnet. Die automatische Lenkung kann ausgehend von einem manuellen Betrieb aktiviert werden, um das Portalhubgerät während der Fahrt entlang eines Containerstapels automatisch zu lenken. Außerdem können auch an den Portalstützen Laserscanner angebracht werden.

DE 10 2015 117 417 A1 offenbart ein Portalhubgerät für Container, insbesondere nach Art eines Straddle Carriers oder Sprinter Carriers, das vier voneinander beabstandet angeordnete Portalstützen aufweist und über seine Räder flurgebunden und frei verfahrbar ist, mit einer Fahrzeugsteuerung, über die das Portalhubgerät automatisch steuerbar und vollautomatisch als AGV betreibbar ist.

Auch sind derartige Portalhubgeräte von Container-Stapelkranen zu unterscheiden, deren horizontaler Kranträger zwei oder mehr Containerreihen überspannt. Zum Aufnehmen oder Absetzen von Containern aus beziehungsweise in einer Containerreihe wird die Hubvorrichtung von derartigen Stapelkranen mittels einer Krankatze entlang des Kranträgers über die gewünschte Containerreihe verfahren und dann das Lastaufnahmemittel mittels der Hubvorrichtung abgesenkt beziehungsweise angehoben. Anders als bei den vorgenannten Portalhubgeräten ist die Hubvorrichtung bei entsprechenden Stapelkranen also bezüglich ihrer horizontalen Position nicht ortsfest zwischen den Portalstützen, sondern über die Krankatze in horizontaler Richtung und somit in horizontaler Richtung relativ zu den Portalstützen beweglich. Ein Portalhubgerät im Sinne der vorliegenden Erfindung weist keine entsprechende Krankatze auf. Auch wird das Lastaufnahmemittel bei Stapelkranen anders als bei Portalhubgeräten im Sinne der vorliegenden Erfindung nicht an den Portalstützen geführt. Aufgrund der zwei oder mehr Containerreihen beziehungsweise Spuren für Lkw oder Eisenbahnwagons überspannenden Kranträger bieten derartige Stapelkrane geräumige Platzverhältnisse als Einbauort für Sensorsysteme mit Laserscannern und/oder kamerabasierten Bildverarbeitungssystemen, die einen automatisierten Betrieb des Stapelkrans ermöglichen. Entsprechende Stapelkrane sind beispielsweise aus der EP 2 974 992 A1, der EP 2 574 587 B1, der EP 3 000 762 B1, der EP 2 352 690 B1 und der EP 1 490 286 B1 bekannt.

Die EP 1 748 335 A2 beschreibt eine manuelle Fernbedienvorrichtung für einen solchen Stapelkran. An einer der Portalstützen des Stapelkrans sind zwei Kameras angebracht.

Auch die DE 10 2007 060 856 A1 und die US 2015/0307330 A1 offenbaren Sensoriken für Stapelkrane.

Die US 6 081 292 A offenbart einen Portalkran, an dessen Spreader Kameras angebracht sind.

In der DE 10 2007 046 287 A1 und der DE 10 2006 044 187 A1 ist das Kalibrieren von Sensoren erwähnt.

Die vergleichsweise geringeren Platzverhältnisse zwischen den Portalstützen und dem sich dort bewegenden Lastaufnahmemittel erschweren bei Portalhubgeräten bisher einen Automatik-Betrieb unter Einsatz von solchen Sensorsystemen.

Der Erfindung liegt die Aufgabe zugrunde, ein Portalhubgerät mit einem Sensorsystem und ein Verfahren zum Betrieb eines solchen Portalhubgeräts bereit zu stellen, die einen besonders sicheren und zuverlässigen Automatik-Betrieb des Portalhubgeräts ermöglichen.

Diese Aufgabe wird durch ein Portalhubgerät mit den Merkmalen des Anspruchs 1 und ein Verfahren mit den Merkmalen des Anspruchs 8 gelöst. In der nachfolgenden Beschreibung und den abhängigen Ansprüchen sind vorteilhafte Ausgestaltungen der Erfindung angegeben.

Ein Portalhubgerät für Container, insbesondere nach Art eines Straddle Carriers oder Sprinter Carriers, das vier voneinander beabstandet angeordnete Portalstützen aufweist und über seine Räder flurgebunden und frei verfahrbar ist, mit einer Fahrzeugsteuerung, über die das Portalhubgerät automatisch steuerbar und vollautomatisch als AGV betreibbar ist, wobei im Automatik-Betrieb sämtliche Manöver des Portalhubgeräts automatisch steuerbar sind, indem Transportaufträge ausgeführt und diesbezüglich vorgegebene Routen steuerungstechnisch in entsprechende Manöver innerhalb eines Terminals zum Umschlag von Containern umgesetzt werden, und mit einem Sensorsystem, das ausgebildet und eingerichtet ist, um zur automatischen Steuerung des Portalhubgeräts Sensordaten von einer Umgebung des Portalhubgeräts zu ermitteln, lässt sich dadurch besonders sicher und zuverlässig in einem Automatik-Betrieb betreiben, dass das Sensorsystem mindestens zwei, vorzugsweise bis zu vier, Sensoreinheiten zur berührungslosen Objektvermessung und Objekterkennung umfasst, von denen jeweils eine Sensoreinheit an einer der vier Portalstützen angeordnet und eingerichtet ist, um zur Objektvermessung und Objekterkennung Sensordaten von einer Umgebung des Portalhubgeräts zu ermitteln. Bei nur zwei Sensoreinheiten sind diese vorzugsweise an zwei benachbarten Portalstützen angebracht, also beispielsweise bezüglich der Fahrtrichtung an den beiden linken oder rechten oberhalb des jeweiligen Fahrwerkträgers oder an den beiden vorderen oder hinteren. Die Objektvermessung umfasst hierbei vorzugsweise auch eine Abstandsmessung der zumindest zweidimensional vermessenen Objekte in Bezug auf das Portalhubgerät. Besonders vorteilhaft ist hierbei das redundante Vermessen und Erkennen eines Objekts aus unterschiedlichen Blickrichtungen von mindestens zwei der vorzugsweise vier Sensoreinheiten möglich. Wie unten näher beschrieben, lässt sich anhand der voneinander unabhängigen, redundanten Sensoreinheiten und der hierüber als Messergebnisse ermittelten Sensordaten eine Plausibilitätsprüfung durchführen. Dies führt zu besonders vertrauenswürdigen Messergebnissen und ermöglicht somit einen besonders sicheren Automatik-Betrieb, der zumindest teilweise auf diesen Sensordaten beziehungsweise Messergebnissen basiert.

Ein derartiges Sensorsystem ermöglicht somit einen besonders kostengünstigen, multifunktionalen Einsatz, der aufgrund der geringen Platzverhältnisse und daraus resultierenden schlechten Sichtverhältnisse im Zusammenhang eines Automatik-Betriebs von Portalhubgeräten bisher noch nicht realisiert wurde. Insbesondere lassen sich mittels eines solchen Sensorsystems hierbei besonders zuverlässig im obigen Sinne genormte oder standardisierte Container, insbesondere ISO-Container, Hindernisse im Fahrbereich des Portalhubgeräts sowie Belade- und Entladepositionen von Containern auf Ladeflächen von Lastkraftwagen beziehungsweise deren Anhängern vermessen und erkennen. Auch das Vermessen und Erkennen von Containern, Containerstapeln und Containern im Lastaufnahmemittel des Portalhubgeräts im Zusammenhang des automatisierten Aufnehmens und Absetzens von Containern sind besonders zuverlässig möglich. Weitere mögliche Anwendungsfälle werden anhand der Figurenbeschreibung erläutert.

In konstruktiv einfacher Weise kann vorgesehen sein, dass jede der Sensoreinheiten einen 3D-Scanner, insbesondere einen Laser-Scanner, und/oder eine Kamera, umfasst. Dies ermöglicht eine besonders detailreiche und somit genaue und zuverlässige Vermessung der in den Sichtfeldern des Sensorsystems befindlichen Objekte.

Des Weiteren können die Sensoreinheiten in vorteilhafter Weise jeweils eine bewegliche, insbesondere rotatorisch und/oder translatorisch bewegliche, Blickrichtung aufweisen. Dadurch lassen sich die Sichtfelder der Sensoreinheiten situationsabhängig flexibel anpassen und insbesondere vergrößern. Insbesondere kann das Sichtfeld jeder Sensoreinheit gezielt in Bereiche gerichtet werden, die bei starrem Sichtfeld beispielsweise durch die zur eigenen Anbringung dienende Portalstütze verdeckt wären.

In diesem Zusammenhang ist es ebenfalls vorteilhaft möglich, dass die Sensoreinheiten jeweils beweglich, insbesondere rotatorisch und/oder translatorisch beweglich, an dem Portalhubgerät und insbesondere der jeweiligen Portalstütze angebracht sind. Hierfür können entsprechende Führungen und Aktoren zur gezielten Veränderung der Position der Sensoreinheiten vorgesehen sein. Dadurch können die Sensoreinheiten entlang der jeweiligen Portalstütze und/oder um deren Längsachse herum bewegt werden, um das Sichtfeld gezielt anzupassen.

Gemäß einer möglichen Ausführungsform kann vorgesehen sein, dass das Sensorsystem zusätzlich vier Spreader-Kameras umfasst, von denen jeweils eine Spreader-Kamera in einem Eckbereich eines Spreaders des Portalhubgeräts angeordnet ist, um zur Objektvermessung und insbesondere Objekterkennung Sensordaten von einer Umgebung des Portalhubgeräts und insbesondere des Spreaders zu ermitteln. Sowohl die Kameras der Sensoreinheiten als auch die Spreader-Kameras können digitale 2D- oder 3D- und Foto- oder Videokameras und als solche Teil eines kamerabasierten Bildverarbeitungssystems zur Objektvermessung und insbesondere Objekterkennung sein, das in das Sensorsystem des Portalhubgeräts eingebunden ist. Etwaige Kameras der Sensoreinheiten und/oder Spreader-Kameras können im Rahmen der kamerabasierten Bildverarbeitung insbesondere nach dem Prinzip der so genannten Stereo-Vision oder 3D-Vision arbeiten, um aus den Sensordaten der einzelnen Sensoreinheiten dreidimensionale Sensordaten von der gewünschten Umgebung des Portalhubgeräts und den dortigen Objekten zu ermitteln.

In besonders vorteilhafter Weise kann zudem vorgesehen sein, dass das Sensorsystem eine automatische Kalibriervorrichtung umfasst, mittels der sich die Sensoreinheiten und die etwaigen Spreader-Kameras an Referenzobjekten mit bekannten Formen, Mustern beziehungsweise Konturen sowie Abmessungen selbst kalibrieren können. Als Referenzobjekte kommen permanent vorhandene Strukturen des Portalhubgeräts, beispielsweise die Portalstützen oder Fahrwerkträger, sowie alternativ oder zusätzlich Markierungselemente in Frage, die hierfür am Portalhubgerät angebracht sind. Die Referenzobjekte sind hierbei vorzugsweise so angeordnet, dass sie im Sichtfeld von mehreren oder allen Sensoreinheiten beziehungsweise Spreader-Kameras liegen. Im Falle von Markierungselementen sind diese hierfür vorzugsweise am Fahrzeugträger beziehungsweise deren in Richtung der Sensoreinheiten zeigenden Oberseite angebracht. Eine derartige automatische Kalibriervorrichtung ermöglicht ein besonders zeitsparendes Kalibrieren des Sensorsystems, so dass die hierdurch bedingten Ausfallzeiten von Portalhubgeräten minimiert werden können. Dies gilt insbesondere, wenn Portalhubgeräte mit einem erfindungsgemäßen Sensorsystem nachgerüstet werden und hierfür dem laufenden Betrieb eines Terminals zum Umschlag von Containern entzogen werden.

Auch kann vorgesehen sein, dass das Sensorsystem einen mit den Sensoreinheiten und der Fahrzeugsteuerung verbundenen Rechner umfasst, um von dem Sensorsystem ermittelte Sensordaten auszuwerten und hierbei auf Basis der ermittelten Sensordaten eine Objekterkennung durchzuführen sowie auf Basis des Auswerteergebnisses das Portalhubgerät automatisch zu steuern.

Ein Verfahren zum Betrieb eines Portalhubgeräts für Container, insbesondere nach Art eines Straddle Carriers oder Sprinter Carriers, das vier voneinander beabstandet angeordnete Portalstützen aufweist und über seine Räder flurgebunden und frei verfahrbar ist, mit einer Fahrzeugsteuerung, über die das Portalhubgerät automatisch gesteuert und vollautomatisch als AGV betrieben wird, wobei im Automatik-Betrieb sämtliche Manöver des Portalhubgeräts automatisch steuerbar sind, indem Transportaufträge ausgeführt und diesbezüglich vorgegebene Routen steuerungstechnisch in entsprechende Manöver innerhalb eines Terminals zum Umschlag von Containern umgesetzt werden, und mit einem Sensorsystem, das ausgebildet und eingerichtet ist, um zur automatischen Steuerung des Portalhubgeräts Sensordaten von einer Umgebung des Portalhubgeräts zu ermitteln, lässt sich für einen besonders sicheren und zuverlässigen Automatik-Betrieb des Portalhubgeräts dadurch verbessern, dass das Sensorsystem mindestens zwei, vorzugsweise bis zu vier, Sensoreinheiten zur berührungslosen Objektvermessung und Objekterkennung umfasst, von denen jeweils eine Sensoreinheit an einer der vier Portalstützen angeordnet ist und zur Objektvermessung und Objekterkennung Sensordaten von einer Umgebung des Portalhubgeräts ermittelt. Vorzugsweise erfolgt mittels der mindestens zwei Sensoreinheiten das redundante Vermessen und Erkennen eines Objekts aus unterschiedlichen Blickrichtungen, das oben in Bezug auf das erfindungsgemäße Portalhubgerät und unten anhand der Figurenbeschreibung ausführlicher erläutert wird. Für die konstruktiven Details des Sensorsystems sind im Rahmen des erfindungsgemäßen Verfahrens die oben in Bezug auf das erfindungsgemäße Portalhubgerät sowie unten anhand der Figurenbeschreibung beschriebenen Varianten denkbar.

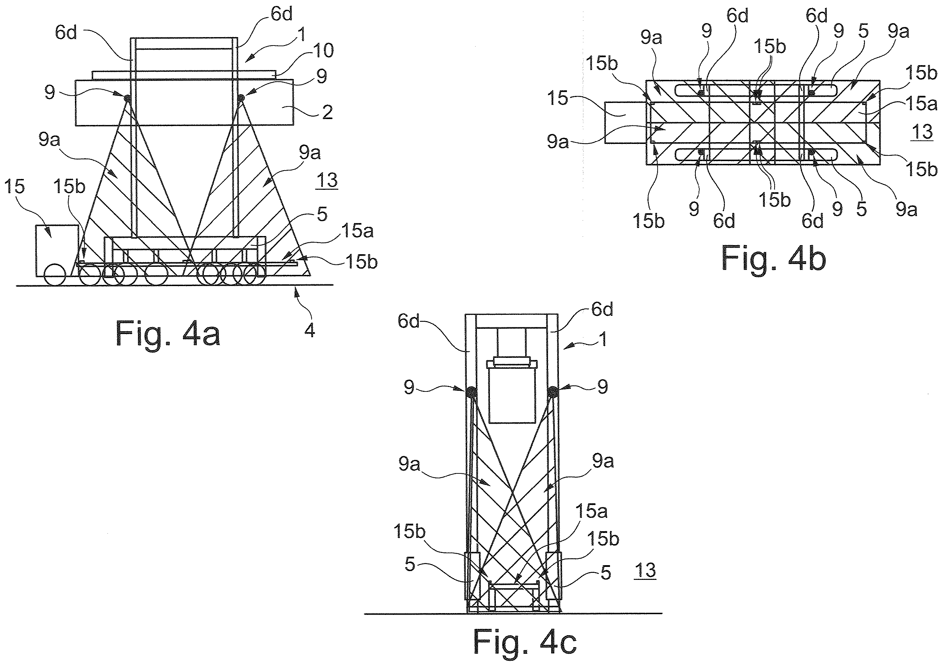

Zudem kann vorteilhaft vorgesehen sein, dass bei der Ermittlung der Sensordaten zur Objektvermessung und insbesondere Objekterkennung Blickrichtungen der Sensoreinheiten und etwaiger Spreader-Kameras des Sensorsystems bewegt werden. Dies kann auch eine Bewegung der Sensoreinheiten beziehungsweise Spreader-Kameras selbst beinhalten. Die Bewegungen der Sichtfelder und/oder der jeweiligen Sensoreinheiten können rotatorisch und/oder translatorisch erfolgen, um insbesondere ein Objekt aus verschiedenen Blickwinkeln zu erfassen und zu vermessen. Dadurch lassen sich die jeweiligen Sichtfelder situationsabhängig flexibel anpassen und vergrößern sowie jeweils auf dasselbe Objekt richten. Somit ist es möglich, dass insbesondere im Zusammenhang des redundanten Vermessens und Erkennens eines Objekts einzelne Sichtfelder gezielt zumindest teilweise zusammenfallen und sich überschneiden beziehungsweise überlappen (siehe beispielsweise Figuren 4a bis 4c).

Auch kann das Sensorsystem eine automatische Kalibriervorrichtung umfassen, mittels der sich die Sensoreinheiten und die etwaigen Spreader-Kameras wie oben bereits erwähnt an Referenzobjekten, insbesondere an permanent vorhandenen Strukturen des Portalhubgeräts oder an Markierungselementen, die am Portalhubgerät angebracht sind, selbst kalibrieren.

Darüber hinaus lassen sich die ermittelten Sensordaten auswerten und auf Basis der ermittelten Sensordaten eine Objekterkennung durchführen sowie auf Basis des Auswerteergebnisses das Portalhubgerät automatisch steuern.

Weitere vorteilhafte Ausgestaltungen und Details der Erfindung ergeben sich aus der nachfolgenden Beschreibung. Es zeigen:
Figuren 1a bis 1c drei Ansichten eines Portalhubgeräts bei der Anfahrt zu einem Containerlager eines Terminals zum Umschlag von Containern,
Figuren 2a bis 2c drei Ansichten des Portalhubgeräts bei der Fahrt in dem Containerlager aus den Figuren 1a bis 1c,
Figuren 3a bis 3c drei Ansichten des Portalhubgeräts bei der Fahrt in dem Terminal außerhalb des Containerlagers,
Figuren 4a bis 4c drei Ansichten des Portalhubgeräts beim Absetzen eines Containers auf der Ladefläche eines Lastkraftwagens,
Figuren 5a bis 5c drei Ansichten des Portalhubgeräts in einer alternativen Ausführungsform beim Absetzen eines Containers auf der Ladefläche eines Lastkraftwagens und
Figur 6 eine schematische Ansicht eines Systems zur automatischen Steuerung des Portalhubgeräts.

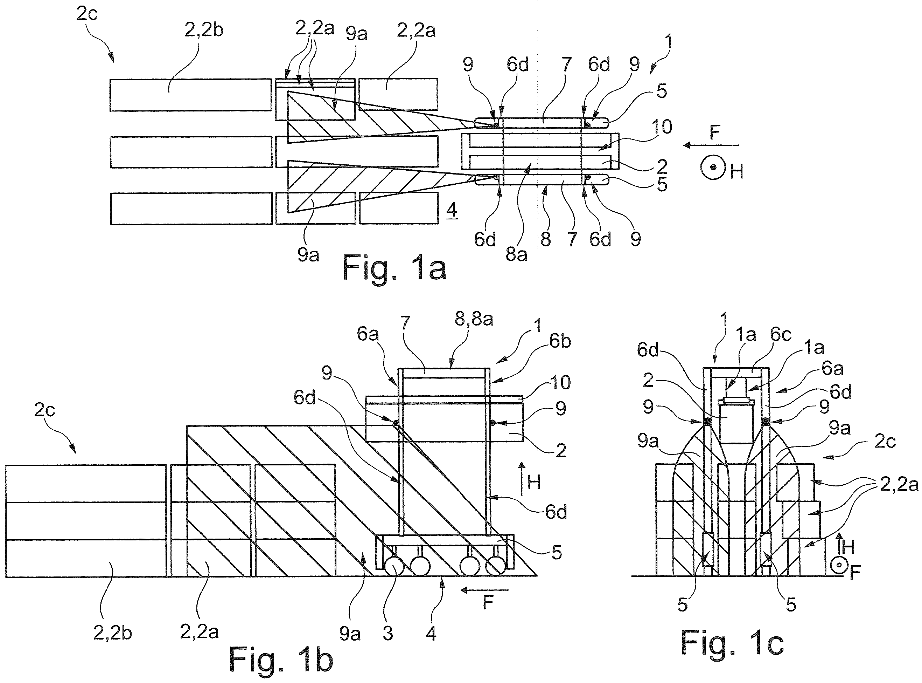

Die Figuren 1a bis 1c zeigen ein automatisch geführtes Portalhubgerät 1 bei der Anfahrt zu einem Containerlager 2c eines Terminals zum Umschlag von Containern 2 in einer Draufsicht (Figur 1a) und zwei Seitenansichten hiervon mit horizontaler Blickrichtung (Figuren 1b und 1c). Das Portalhubgerät 1 ist ein Schwerlastfahrzeug mit einer als Portalhubvorrichtung ausgebildeten Hubvorrichtung zum Heben und Senken von Containern 2, insbesondere in Form von standardisierten oder genormten Containern wie beispielsweise ISO-Containern im eingangs definierten Sinne, die in üblicher Weise genormte Beschläge und insbesondere Eckbeschläge aufweisen.

Das Portalhubgerät 1 ist flurgebunden über insgesamt acht gummibereifte Räder 3 auf einer Flurfläche 4 frei verfahrbar. Grundsätzlich ist es auch möglich, mehr oder weniger als acht entsprechender Weise mit Pneus versehene Räder 3 vorzusehen, wenn dies technisch erforderlich beziehungsweise möglich ist. Die Räder 3 des Portalhubgerätes 1 sind an zwei Fahrwerkträgern 5 befestigt, die jeweils mit ihrer Längserstreckung in beziehungsweise parallel zur Fahrtrichtung F des Portalhubgerätes 1 ausgerichtet sind. Die beiden Fahrwerkträger 5 umfassen jeweils vier der Räder 3, die in Richtung der Längserstreckung des jeweiligen Fahrwerkträgers 5 gesehen mit Abstand hintereinander angeordnet sind. Die Fahrwerkträger 5 weisen zudem Fahrantriebe und Lenkmotoren für die Räder 3 auf, die von einer Antriebseinheit des Portalhubgeräts 1 gespeist werden. Je nach verwendeter Antriebstechnologie, die dieselelektrisch, dieselhydraulisch oder vollelektrisch sein kann, umfasst die Antriebseinheit Komponenten wie beispielsweise einen Dieselmotor und Generator, Batterien und/oder Hydraulikaggregate. Durch die vorhandene Einzelradlenkung können über eine entsprechende Steuerung verschiedene Lenkprogramme wie beispielsweise eine optimierte Standardkurvenfahrt, Kreisfahrt, eine Drehung um die eigene Vertikalachse oder ein Krebsgang realisiert werden.

Die beiden parallel nebeneinander und mit Abstand zueinander angeordneten Fahrwerkträger 5 sind über einen vorderen ersten Portalrahmen 6a und über einen hinteren zweiten Portalrahmen 6b miteinander verbunden. Dementsprechend sind die beiden u-förmigen Portalrahmen 6a, 6b in Fahrtrichtung F gesehen voneinander beabstandet angeordnet. Jeder der beiden Portalrahmen 6a, 6b umfasst einen oberen horizontalen und quer zur Fahrtrichtung F ausgerichteten Portalträger 6c, an dessen seitlichen Enden sich jeweils eine Portalstütze 6d anschließt, die sich vertikal und geradlinig nach unten in Richtung der Flurfläche 4 erstreckt. Durch diesen Aufbau sind die starr ausgebildeten Portalstützen 6d in der Draufsicht gesehen in den Ecken eines gedachten Vierecks, vorzugsweise Rechtecks, angeordnet. Über die insgesamt vier Portalstützen 6d stützen sich die beiden Portalrahmen 6a, 6b auf den Fahrwerkträgern 5 ab, wodurch sich ein spinnenbeinartiger Aufbau ergibt. Die beiden Portalstützen 6d jedes Portalrahmens 6a, 6b und dementsprechend auch die beiden Fahrwerkträger 5 sind mindestens mit der Breite eines ISO-Containers voneinander beabstandet. Der Abstand der Fahrwerkträger 5 ist jedoch geringer als die Gesamtbreite von zwei mit ihren Längsseiten nebeneinander stehenden ISO-Containern, so dass das Portalhubgerät anders als ein Container-Stapelkran nicht über zwei entsprechend nebeneinander stehende ISO-Container hinweg fahren kann. Außerdem sind die beiden Portalrahmen 6a, 6b über zwei voneinander beabstandete und in Fahrtrichtung F ausgerichtete Längsträger 7 miteinander verbunden. Die beiden Portalträger 6c und die Längsträger 7 bilden einen rechteckigen Oberrahmen 8, der die vier Portalstützen 6d an ihrem oberen Ende miteinander verbindet und von den Portalstützen 6d getragen wird. In jeder Ecke des Oberrahmens 8 greift hierbei eine der Portalstützen 6d an.

Außerdem umfasst das Portalhubgerät 1 eine zwischen den Portalstützen 6d im Bereich des Oberrahmens 8 angeordnete Maschinenplattform 8a, die vorzugsweise als rahmenförmige Stahlkonstruktion ausgebildet ist. Die Maschinenplattform 8a ist entsprechend der von den Portalstützen 6d begrenzten Grundfläche der Tragstruktur in der Draufsicht gesehen im Wesentlichen rechteckförmig ausgebildet und zwischen die Portalstützen 6d eingepasst. Auf der Maschinenplattform 8a ist zumindest die Antriebseinheit angeordnet. Die Maschinenplattform 8a dient somit als Tragstruktur zur Unterbringung von oben genannten Komponenten der Antriebseinheit. Zusätzlich können auf der Maschinenplattform 8a auch Schaltschränke, Bremswiderstände und weitere Antriebskomponenten des Portalhubgeräts 1 angeordnet sein.

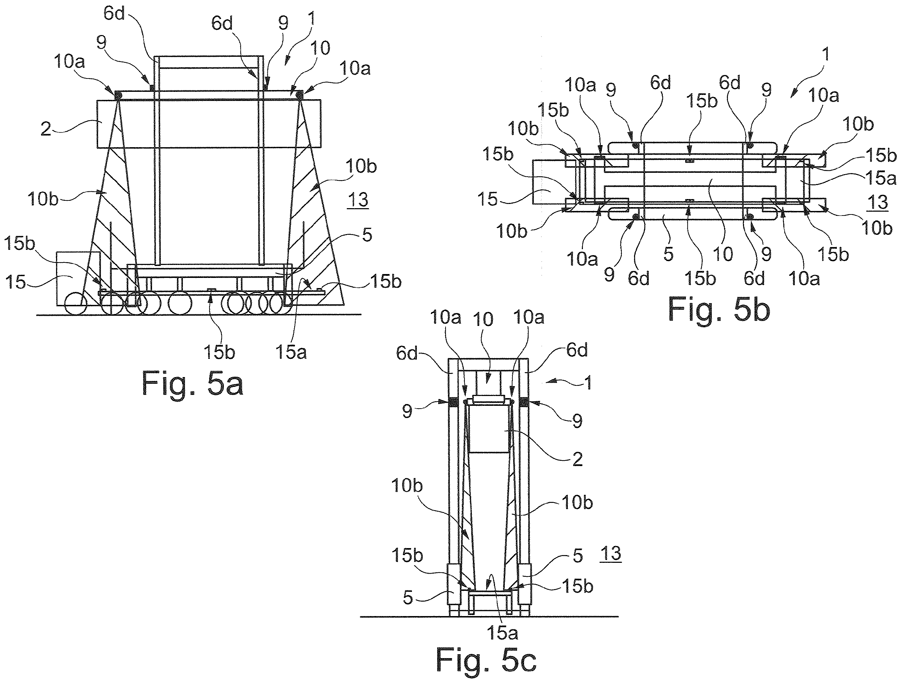

Die Hubvorrichtung des Portalhubgeräts 1 ist nach Art eines Hebezeugs ausgebildet, beispielsweise als ein oder mehrere Stahlseile 1a (siehe beispielsweise Figur 1c) aufweisende Seilzugvorrichtung. Über die motorisierte und vorzugsweise elektromotorbetriebene Hubvorrichtung ist ein Lastaufnahmemittel zur Aufnahme und Handhabung der Container 2 unterhalb der Maschinenplattform 8a und zwischen den Portalstützen 6d in einer im Wesentlichen vertikalen Hubrichtung H hebbar und entgegengesetzt der Hubrichtung H senkbar. Hierfür ist die Seilzugvorrichtung über ihre Seile 1a mit dem Lastaufnahmemittel verbunden, wobei die Seile 1a über an dem Lastaufnahmemittel befestigte Umlenkrollen geführt sein können, so dass je Umlenkrolle zwei Seilstränge in Richtung des Oberrahmens 8 ablaufen. Um das Lastaufnahmemittel anheben beziehungsweise absenken zu können, sind die Seile auf eine gemeinsame oder mehrere separate Seiltrommeln aufwickelbar beziehungsweise hiervon abwickelbar. Die Seiltrommeln sind über die Antriebseinheit oder einen hiervon getrennten eigenen motorisierten Hubantrieb antreibbar. Wenn jedes Seil über eine am Lastaufnahmemittel befestigte Umlenkrolle im Sinne einer losen Seilrolle geführt ist, ist jedes Seil zumindest einfach eingeschert, wodurch eine Art Flaschenzug gebildet wird und die an jedem Seil angreifende Last auf die Seilstränge des entsprechenden Seils aufgeteilt wird. Auch eine mehrfache Einscherung mit entsprechend größerer Anzahl an Seilrollen ist denkbar. Die Hubvorrichtung ist zudem bezüglich ihrer horizontalen Position zwischen den Portalstützen 6d ortsfest angeordnet, so dass mangels einer Krankatze die Hubvorrichtung und das Lastaufnahmemittel allein durch geeignetes Manövrieren des Portalhubgeräts 1 über der gewünschten Containerreihe oder der gewünschten Belade- oder Entladeposition über der Ladefläche 15a eines Lastkraftwagens 15 (siehe Figuren 4a bis 4c und 5a bis 5c) positioniert werden müssen, um dort einen Container 2 aufzunehmen oder abzustellen. Die Hubvorrichtung oder zumindest Teile hiervon, beispielsweise Seiltrommeln oder ein etwaiger eigener Hubantrieb, können hierbei auf der Maschinenplattform 8a angeordnet sein. Alternativ können die Seiltrommeln jedoch auch auf den Fahrwerkträgern 5 zwischen beiden Portalrahmen 6a, 6b angeordnet sein.

Das Lastaufnahmemittel ist als Spreader 10 ausgebildet, der insbesondere ein sogenannter single-lift oder twin-lift Spreader sein kann. In der twin-lift Variante können zwei in Fahrtrichtung F des Portalhubgeräts 1 gesehen in Längsausrichtung unmittelbar hintereinander angeordnete Container 2a mit einer Länge von jeweils 20 Fuß aufgenommen werden. Zur Aufnahme eines Containers 2 greifen so genannte Twistlocks des Spreaders 10 in entsprechende obere Beschläge beziehungsweise Eckbeschläge der beispielsweise als ISO-Container ausgebildeten Container 2 ein, durch deren anschließendes Verriegeln der Container 2 am Spreader 10 befestigt wird. In üblicher Weise ist das Lastaufnahmemittel unterhalb des Oberrahmens 8 und zwischen den Portalstützen 6d des vorderen ersten Portalrahmens 6a und den Portalstützen 6d des hinteren zweiten Portalrahmens 6b in und entgegen der Hubrichtung H auf und ab bewegbar und kann hierbei an den Portalstützen 6d geführt sein. Auch kann der Spreader 10 teleskopierbar sein und somit eine variable Länge und/oder Breite aufweisen, um Container 2 mit unterschiedlicher Länge und/oder Breite aufnehmen zu können, beispielsweise Container 2a mit einer Länge von 20 Fuß oder Container 2b mit einer Länge von 40 oder 45 Fuß. Die Ansteuerung der Hubvorrichtung und des Spreaders 10, einschließlich seiner etwaigen Teleskopfunktionen, erfolgt ebenfalls automatisch über die Fahrzeugsteuerung 11.

Der Spreader 10 erstreckt sich mit seinem Längsträger in Fahrtrichtung F zwischen den Portalstützen 6d. Außerdem umfasst der Spreader 10 zwei Querträger, die sich jeweils an den gegenüberliegenden Enden des Längsträgers zwischen den Portalstützen 6d der beiden Portalrahmen 6a und 6b und somit quer zur Fahrtrichtung F erstrecken. Außerdem können an jedem der beiden Querträger Umlenkrollen befestigt sein, um hierüber den Spreader 10 an den Seilen 1a der Seilzugvorrichtung zu befestigen und aufzuhängen.

Das Portalhubgerät 1 wird üblicherweise zwischen dem Containerlager 2c des Terminals und einem Umschlagbereich 13 (siehe Figuren 4a bis 4c und Figuren 5a bis 5c) des Terminals verfahren, um Container 2 in dem Umschlagbereich 13 aufzunehmen oder abzugeben beziehungsweise in dem Containerlager 2c einzulagern oder auslagern. Je nach Art des Terminals können die Container 2 in dem Umschlagbereich 13 von einem Kran, beispielsweise einem Ship to Shore-Kran - kurz: STS-Kran - zum Löschen beziehungsweise Beladen von Schiffen, abgestellt oder aufgenommen werden oder von einem Lastkraftwagen 15 für den Transport im öffentlichen Straßenverkehr angeliefert oder abgeholt werden. Dementsprechend nimmt das Portalhubgerät 1 die Container 2 von der Flurfläche 4 beziehungsweise dem dortigen Containerstapel oder der Ladefläche 15a des Lastkraftwagens 15a auf beziehungsweise stellt sie dort jeweils ab, indem es über die entsprechende Stellfläche oder den Containerstapel auf der Flurfläche 4 beziehungsweise die entsprechende Ladefläche 15a fährt und die Hubvorrichtung sowie der Spreader 10 beziehungsweise dessen Twistlocks betätigt werden.

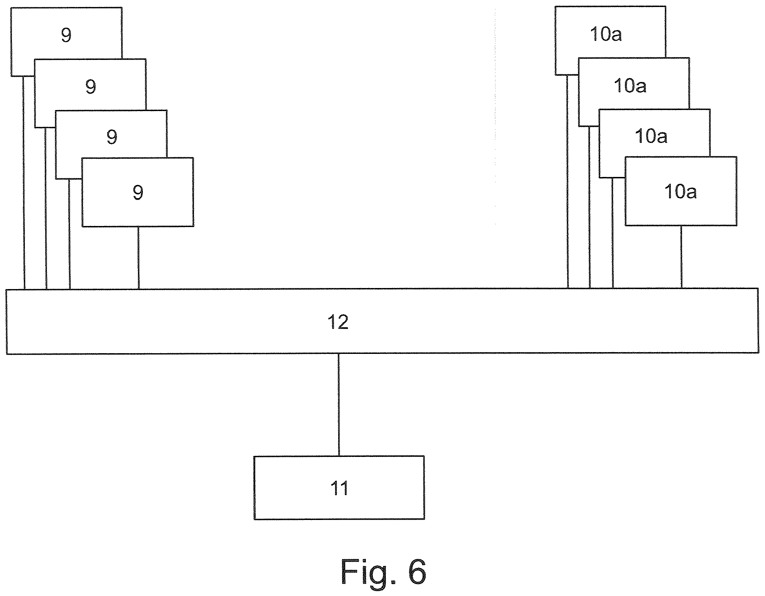

Da das Portalhubgerät 1 im eingangs beschriebenen Sinne vollautomatisch als AGV betreibbar ist, weist das Portalhubgerät 1 eine entsprechende Fahrzeugsteuerung 11 auf (siehe Figur 6). Mittels der Fahrzeugsteuerung 11 sind im Automatik-Betrieb sämtliche Manöver des Portalhubgeräts 1 automatisch steuerbar, indem Transportaufträge, die beispielsweise mittels eines übergeordneten rechnergestützten Leitsystems geplant werden, ausgeführt und diesbezüglich vorgegebene Routen steuerungstechnisch in entsprechende Manöver innerhalb des Terminals zum Umschlag von Containern 2 umgesetzt werden. Die Umsetzung in Manöver umfasst die Erzeugung der hierfür erforderlichen Vorgaben in Form von Soll-Werten für die Ansteuerung der Fahrantriebe und/oder Ansteuerung der Lenkung beziehungsweise Lenkmotoren und/oder Ansteuerung der Hubvorrichtung einschließlich des Spreaders 10 des jeweiligen Portalhubgeräts 1. In diesem Zusammenhang werden mittels der Fahrzeugsteuerung 11 also Lenkvorgänge und Geschwindigkeiten sowie Beschleunigungen und Verzögerungen sämtlicher Antriebe, gegebenenfalls durch einen Bremsvorgang, des Portalhubgeräts 1 automatisch gesteuert.

Die zur Abarbeitung von Transportaufträgen vorgegebenen und somit abzufahrenden Routen werden im Sinne von Soll-Routen mittels des Leitsystems generiert und über drahtlose Kommunikationsverbindungen beispielsweise in Form von WLAN-Verbindungen, an die Portalhubgeräte 1 beziehungsweise deren Fahrzeugsteuerung 11 übermittelt. Die Soll-Routen können aus mehreren Einzelabschnitten mit jeweils einem Start- und einem Zielpunkt bestehen. Auch eine Vorgabe und Änderung von Soll-Routen kann hierbei über das Leitsystem und die Kommunikationsverbindungen erfolgen, beispielsweise durch für bestimmte Zeitpunkte vorgegebene Zielpositionen, zu nutzende Fahrspuren und/oder Fahrtrichtungen. Zudem kann das Leitsystem dynamisch Verkehrsregeln anpassen und Bereiche, insbesondere einzelne Fahrspuren, im Sinne von Sperrbereichen blockieren oder freigeben und somit sicherstellen, dass sich in einem vorgegebenen Bereich nur ein Portalhubgerät 1 befindet.

Neben der Planung von Transportaufträgen erfolgt also auch die Routenplanung und Routenüberwachung über das Leitsystem. Um hierzu die Fahrantriebe, die Lenkmotoren und die Hubvorrichtung beziehungsweise den Spreader 10 im Rahmen eines Automatik-Betriebs der Portalhubgeräte 1 zielgerichtet ansteuern zu können, erfolgt auch eine kontinuierliche Verarbeitung von Ist-Werten der zeitlich veränderlichen Positionen und Orientierung beziehungsweise Ausrichtungen der im Terminal befindlichen Portalhubgeräte 1 und weiterer Betriebsinformationen wie beispielsweise die jeweils genutzten Fahrbereiche, Fahrspuren und Fahrtrichtungen der Portalhubgeräte 1 sowie Fahrgeschwindigkeiten und Verkehrsregeln. Die entsprechenden Ist-Werte werden in diesem Zusammenhang an das Leitsystem und/oder die Fahrzeugsteuerung 11 zurückgemeldet. Hierzu können Ortungssysteme auf Basis von Transpondertechnologie, GPS oder D-GPS/Long Position Radar - kurz: LPR - genutzt werden.

In dem Containerlager 2c des Terminals können die Container 2 in mehreren voneinander beabstandeten und parallel zueinander verlaufenden Containerreihen gestapelt werden. In Figur 1a sind beispielhaft drei Containerreihen des Containerlagers 2c dargestellt. Innerhalb einer Containerreihe sind die Container 2, 2a, 2b mit ihren jeweiligen Schmalseiten aneinandergrenzend abgestellt, so dass die Längsseiten der Container 2, 2a, 2b innerhalb eines geringen Toleranzbereichs miteinander fluchtend ausgerichtet sind. Zwei benachbarte Containerreihen sind durch eine Gasse zumindest so weit voneinander beabstandet, dass das Portalhubgerät 1 mit seinen Fahrwerkträgern 5 und Portalstützen 6d kollisionsfrei in der Gasse zwischen den angrenzenden benachbarten Containerreihen fahren kann, wobei die Container 2 der überfahrenen Containerreihe zwischen den Fahrwerkträgern 5 und den Portalstützen 6d der beiden Portalrahmen 6a, 6b angeordnet sind. Die Lagerhaltung beziehungsweise Verwaltung des Containerlagers 2c kann ebenfalls über das Leitsystem beziehungsweise dessen Rechner erfolgen und in die Planung beziehungsweise Vorgabe der Transportaufträge beziehungsweise Routen einfließen.

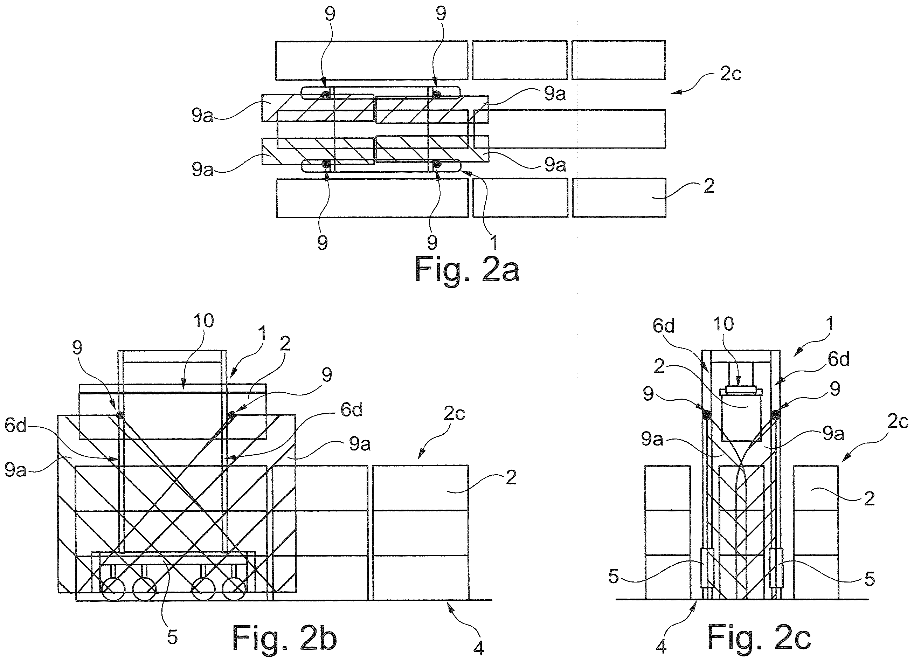

In den Figuren 1a bis 1c ist der Spreader 10 des Portalhubgeräts 1 mit einem aufgenommenen Container 2 so weit angehoben, dass der Container 2 durch Verfahren des Portalhubgeräts 1 in der Fahrtrichtung F in das Containerlager 2c transportiert und auf der mittleren der drei dargestellten Containerreihen abgestellt werden kann. Das beispielhaft abgebildete Portalhubgerät 1 ist also als sogenanntes 1 über 3-Gerät ausgebildet, so dass der aufgenommene Container 2 auf einem Containerstapel aus drei Containern 2 in der gewünschten Containerreihe abgesetzt werden kann (siehe auch Figuren 2a bis 2c). Umgekehrt kann auch der oberste Container 2 eines aus vier Containern bestehenden Containerstapels aufgenommen und auf der Flurfläche 4, einem Containerstapel mit weniger als vier Containern 2 oder einer Ladefläche 15a eines Lastkraftwagens 15 abgesetzt werden. Auch kann das Portalhubgerät 1 im eingangs beschriebenen Sinne andere Bauhöhen und zugehörige maximale Hubhöhen aufweisen und dementsprechend beispielsweise ein 1 über 4-Gerät oder ein 1 über 0-Gerät sein.

Im Zusammenhang der automatischen Steuerung ist das in den Figuren dargestellte Portalhubgerät 1 mit einem erfindungsgemäßen Sensorsystem zur berührungslosen Objektvermessung und insbesondere Objekterkennung versehen, das zur automatischen Steuerung des Portalhubgeräts 1 Sensordaten von einer Umgebung des Portalhubgeräts 1 ermittelt und zur Verfügung stellt. Als Objekte können insbesondere vermessen und dadurch erkannt werden: einzelne abgestellte Container 2, Containerstapel, Containerreihen mit mehreren einzelnen abgestellten Containern 2 und/oder mehreren Containerstapeln, Gassen zwischen den vorgenannten Containern 2, Containerstapeln und Containerreihen, ein mit dem Lastaufnahmemittel verbundener Container 2 oder ein Chassis eines Lastkraftwagens 15 beziehungsweise dessen Ladefläche 15a einschließlich der auf der Ladefläche 15a angeordneten Twistlocks 15b für die Verankerung mit den unteren Beschlägen beziehungsweise Eckbeschlägen des auf der Ladefläche 15a abzustellenden Containers 2. Darüber hinaus können über eine im Rahmen der Objektvermessung erfolgende Abstandsmessung die Positionen der vorgenannten Objekte in einem ortsfesten Koordinatensystem und/oder relativ zu dem jeweiligen Portalhubgerät 1 ermittelt werden und daraus wiederum Zielpositionen für das Portalhubgerät 1 und insbesondere den Spreader 10 ermittelt werden.

Die Einbindung des Sensorsystems ermöglicht dadurch ein besonders präzises Ansteuern der Portalhubgeräte 1 im Automatik-Betrieb und hierbei insbesondere ein Vermeiden von Kollisionen während der Fahrt durch das Terminal sowie beim Aufnehmen und Abstellen von Containern 2 im Containerlager 2c sowie im Übergabebereich 13.

Der Aufbau und besonders vorteilhafte Anwendungsszenarien des Sensorsystems werden nachfolgend erläutert.

Das Sensorsystem umfasst vorzugsweise vier Sensoreinheiten 9 zur berührungslosen Objektvermessung. Jeweils eine der vier Sensoreinheiten 9 ist an einer der vier Portalstützen 6d angeordnet und ermittelt Sensordaten von einer Umgebung des Portalhubgeräts 1, die sich im jeweils schraffiert dargestellten Sichtfeld 9a im Sinne eines Detektionsbereichs der jeweiligen Sensoreinheit 9 befindet. Dadurch können die in der Umgebung beziehungsweise dem Sichtfeld 9a befindlichen Objekte vermessen und insbesondere erkannt, das heißt identifiziert, werden. In einer Mindestkonfiguration genügt es, wenn zumindest zwei Sensoreinheiten 9 vorgesehen sind und von diesen jeweils eine an einer von zwei benachbarten Portalstützen 6d angebracht ist. Somit können beispielsweise bezüglich der Fahrtrichtung F die beiden linken Portalstützen 6d oberhalb des linken Fahrwerkträgers 5 oder die beiden vorderen Portalstützen 6d jeweils mit einer Sensoreinheit 9 versehen sein. Dies gilt auch für alle vorliegend beschriebenen Ausführungsbeispiele, die im Sinne einer bevorzugten Ausführungsform jeweils mit vier Sensoreinheiten 9 versehen sind. Die Sensoreinheiten 9 können in allen vorliegend beschriebenen Ausführungsbeispielen beispielsweise jeweils einen 3D-Scanner, insbesondere einen Laser-Scanner, umfassen. Alternativ oder zusätzlich können die Sensoreinheiten 9 auch jeweils eine Kamera umfassen, die ebenfalls zur Objektvermessung und anschließenden Objekterkennung Sensordaten von einer Umgebung des Portalhubgeräts 1 und dortigen Objekten ermitteln, die sich im Sichtfeld 9a der Sensoreinheit 9 beziehungsweise deren Kamera befinden. Wenn Kameras eingesetzt werden, handelt es sich hierbei vorzugsweise um digitale Foto- oder Videokameras, die als Sensordaten 2D-Daten ermitteln. Es können jedoch auch 3D-Kameras eingesetzt werden.

Die Sensoreinheiten 9 des Sensorsystems sind jeweils so hoch oberhalb der Flurfläche 4 an den Portalstützen 6d angeordnet, dass ein Containerstapel mit einer Höhe, die von dem Portalhubgerät 1 maximal kollisionsfrei überfahren werden kann, überblickt werden kann. Im vorliegenden Beispiel kann von den Sensoreinheiten 9 also eine Höhe überblickt werden, die vier gestapelten Containern 2 entspricht. Die vertikale Anbauposition der Sensoreinheiten 9 hängt also von der Bauhöhe des Portalhubgeräts 1 ab. Die Sichtfelder 9a können auch gezielt zumindest teilweise an dem im Spreader 10 aufgenommenen Container 2 vorbei in Richtung der Flurfläche 4 ausgerichtet werden. Außerdem sind die Sensoreinheiten 9 jeweils an der äußeren und in beziehungsweise entgegen der Fahrtrichtung F zeigenden Seite der entsprechenden Portalstütze 6d angebracht. Dadurch sind die Portalstützen 6d des linken Fahrwerkträgers 5 zwischen den zugehörigen Sensoreinheiten 9 angeordnet. Dies gilt entsprechend für die Portalstützen 6d des rechten Fahrwerkträgers 5 und die dortigen Sensoreinheiten 9.

Um ein größeres und insbesondere variables Sichtfeld 9a für die Sensoreinheiten 9 zu erreichen, weisen die Sensoreinheiten 9a jeweils eine bewegliche, insbesondere rotatorisch und/oder translatorisch bewegliche, Blickrichtung auf. Auch können die Sensoreinheiten 9a insgesamt beweglich, insbesondere rotatorisch und/oder translatorisch beweglich, an dem Portalhubgerät 1 beziehungsweise der jeweiligen Portalstütze 6d angebracht sein. Dadurch kann das Sichtfeld 9a der jeweiligen Sensoreinheit 9a flexibel angepasst und ausgerichtet werden und insbesondere der Abstand zu einer abzutastenden und zu vermessenden Objektoberfläche verkleinert werden. Im Falle von Laser-Scannern kann die Rotation beziehungsweise das Verschwenken der zur Objektvermessung in die Umgebung des Portalhubgeräts 1 emittierten Laserstrahlen insbesondere um horizontale und/oder vertikale Achsen erfolgen. Gleiches gilt analog für etwaige Rotationen oder Verschwenken von etwaigen Kameras der Sensoreinheiten 9. Die Blickrichtung der Sensoreinheiten 9 kann auf diese Weise gezielt so eingestellt werden, dass sich das jeweilige Sichtfeld 9a in und/oder entgegen sowie quer zu der Fahrtrichtung F und hierbei auch in Richtung der Flurfläche 4 und bis zur Flurfläche 4 hinunter erstreckt. Das Sichtfeld 9a der Sensoreinheiten 9 kann dadurch auch die Fahrwerkträger 5 und den unterhalb der Sensoreinheiten 9 angeordneten Teil der Portalstützen 6d umfassen. In diesem Sinne sind in den Figuren verschiedene Sichtfelder 9a schematisch dargestellt. In Figur 1a sind die Sichtfelder 9a der in Bezug auf die Fahrtrichtung F vorderen beiden Sensoreinheiten 9 dargestellt. Die Sichtfelder 9a sind hierbei in die Gassen des Containerlagers 2c hinein gerichtet. Wie in Figur 1b dargestellt ist, können diese Sichtfelder 9a von ihrer Anbauposition aus auch entgegen der Fahrtrichtung F gerichtet werden und sich hierbei an der jeweiligen Portalstütze 6d innen und/oder außen vorbei erstrecken. Dies gilt auch für die in den weiteren Figuren dargestellten Sichtfelder 9a, insbesondere in Figur 4b.

Auch umfasst das Sensorsystem einen mit den Sensoreinheiten 9 und der Fahrzeugsteuerung 11 signalübertragend verbundenen Rechner 12 (siehe Figur 6), um die von dem Sensorsystem ermittelten Sensordaten auszuwerten und hierbei auf Basis der ermittelten Sensordaten die Objekterkennung durchzuführen. Der Rechner 12 und/oder die Fahrzeugsteuerung 11 können Teil einer Sicherheitssteuerung sein, die auch als SPS oder PLC (Programmable Logic Controller) beziehungsweise Failsaife PLC oder F-PLC bezeichnet wird. Auf Basis des Auswerteergebnisses wird dann das Portalhubgerät 1 automatisch gesteuert. Hierzu kann das Sensorsystem jedes Portalhubgeräts 1 auch über den Rechner 12 und/oder die Fahrzeugsteuerung 11 mit dem übergeordneten Leitsystem kommunizieren und dabei die oben genannten drahtlosen Kommunikationsverbindungen nutzen. Im Rahmen der Auswertung und insbesondere der Objekterkennung kann auch ein Vergleich der Sensordaten mit bekannten und beispielsweise im Rechner 12 oder dem Leitsystem gespeicherten Formen, Mustern und Konturen der oben genannten Objekte erfolgen und auf Basis des Vergleichs das entsprechende Objekt und dessen Abstand vom Portalhubgerät 1 erkannt werden. Auf Basis des Auswerteergebnisses der Sensordaten können auch die Ermittlung und eventuelle Änderung von Zielpositionen und zugehörigen Soll-Routen für das Portalhubgerät 1 durch den Rechner 12 und/oder das Leitsystem vorgenommen und anschließend an die Fahrzeugsteuerung 11 übermittelt werden, damit diese die steuerungstechnische Umsetzung in entsprechende Manöver vornimmt.

Das Portalhubgerät 1 kann ein entsprechendes Sensorsystem, wie es in den Figuren 1a bis 1c dargestellt ist, zum Kollisionsschutz im Containerlager 2c einsetzen. Hierbei kann mittels des Sensorsystems erkannt werden, wenn einzelne Container 2 eines Containerstapels oder ein Containerstapel insgesamt über den Toleranzbereich der jeweiligen Containerreihe hinausragen, so dass in einer Gasse des Containerlagers 2c, die von dem Portalhubgerät 1 befahren wird oder befahren werden soll, eine Kollision zwischen dem Portalhubgerät 1 und dem Container 2 beziehungsweise Containerstapel droht. In diesem Zusammenhang erfolgt anhand der vom Sensorsystem ermittelten Sensordaten eine Vermessung der in den Sichtfeldern 9a liegenden Gassen und angrenzenden Container 2. Die Vermessung erfolgt zumindest durch die in Fahrtrichtung F gesehen vorderen beiden Sensoreinheiten 9 des Sensorsystems oder auch durch alle vier Sensoreinheiten 9. Durch die Redundanz können die von mindestens zwei Sensoreinheiten 9 ermittelten Sensordaten und Auswerteergebnisse kombiniert und dadurch auf Plausibilität geprüft werden. Mittels des Rechners 12 und/oder des Leitsystems kann dann automatisiert entschieden werden, ob beide Gassen breit genug für ein kollisionsfreies Erreichen der aktuell geltenden vorgegebenen Zielposition entlang der ursprünglichen Soll-Route sind oder ob diese Zielposition kollisionsfrei über eine geänderte Soll-Route entlang von neu vorgegebenen Zwischenpositionen durch dieselben Gassen erreicht werden kann. Falls dies nicht möglich ist, wird ein Halt mit entsprechender Rückmeldung an das Leitsystem veranlasst. Zu diesem Zweck stehen dem Leitsystem und/oder dem hiermit verbundenen Rechner 12 die relevanten Abmessungen der jeweiligen Portalhubgeräte 1, insbesondere Breitenabmessungen der Fahrwerkträger 5, sowie Gassenbreiten, insbesondere der für eine kollisionsfreie Durchfahrt erforderliche Mindestabstand zwischen den eine Gasse begrenzenden Containern 2 zur Verfügung, auf deren Basis dann ein Vergleich mit den Sensordaten beziehungsweise den hieraus gewonnenen Informationen über die vermessenen und erkannten Objekte erfolgen kann und anschließend die vorgenannten Entscheidungen getroffen werden können.

Die Figuren 2a bis 2c zeigen dieselben drei Ansichten des Containerlagers 2c aus den Figuren 1a bis 1c, jedoch für den Fall, dass beide Gassen eine Fahrt des Portalhubgeräts 1 zu einer vorläufigen vorgegebenen Zielposition ermöglichen. Die Zielposition entspricht einem gewünschten Containerstapel in der mittleren Containerreihe, auf dem der aufgenommene Container 2 abgestellt werden soll. Hier wird das Sensorsystem ebenfalls zum Kollisionsschutz und insbesondere für die Feinpositionierung des Portalhubgeräts 1 und des Spreaders 10 beim Absetzen des Containers 2 auf dem Containerstapel eingesetzt. Zu diesem Zweck erfolgt mittels der zumindest zwei Sensoreinheiten 9 des Sensorsystems, insbesondere mittels aller vier Sensoreinheiten 9, eine Vermessung des gewünschten Containerstapels und insbesondere des obersten Containers 2 dieses Containerstapels. Hierbei können sowohl die Länge des Containers 2 als auch die Positionen der Beschläge, insbesondere Eckbeschläge, ermittelt werden. Auf Grundlage dieser Objektvermessung und darauf basierender Objekterkennung sowie Abstandsmessung kann mittels des Rechners 12 und/oder des Leitsystems die endgültige Zielposition des Portalhubgeräts 1 und des Spreaders 10 für ein möglichst genaues Absetzen gegenüber der vorläufigen Zielposition falls erforderlich so angepasst werden, dass der Container 2 innerhalb des Toleranzbereichs abgestellt wird. Hierbei sind die unteren Beschläge beziehungsweise Eckbeschläge des abgesetzten Containers 2 möglichst bündig auf den oberen Beschlägen beziehungsweise Eckbeschlägen des darunter befindlichen Containers 2 angeordnet. Schematisch dargestellt sind in diesem Zusammenhang die Sichtfelder 9a von allen vier Sensoreinheiten 9a. Wie Figur 2b zeigt, können sich die Sichtfelder 9a der beiden Sensoreinheiten 9, die den in Fahrtrichtung F gesehen am linken Fahrwerkträger 5 angreifenden Portalstützen 6d zugeordnet sind, auch überschneiden. Dementsprechend sind die Sichtfelder 9a zumindest teilweise in einander zugewandter Richtung, das heißt nach hinten beziehungsweise vorne, ausgerichtet. Die dem linken Fahrwerkträger 5 zugewandte Seite des gewünschten Containerstapels kann dadurch von beiden in Figur 2b dargestellten linken Sensoreinheiten 9 mit jeweils unterschiedlichem Blickwinkel und somit redundant und insbesondere unabhängig voneinander vermessen werden. Die Ergebnisse der in der Sicherheitssteuerung beziehungsweise dem Rechner 12 stattfindenden Auswertung der von jeder Sensoreinheit 9 vorgenommenen Objektvermessung werden verglichen und nur bei Gleichheit der Ergebnisse als gültig angenommen. Gleiches gilt für die beiden gegenüberliegenden rechten Sensoreinheiten 9 und die rechte Seite des Containerstapels. Dies ermöglicht eine besonders sichere Objekterkennung und damit auch einen hierauf basierenden, besonders sicheren Automatik-Betrieb. Ein entsprechender Einsatz von mindestens zwei Sensoreinheiten 9 zum redundanten Vermessen und Erkennen eines Objekts aus unterschiedlichen Blickrichtungen ist aufgrund der beweglichen Blickrichtungen beziehungsweise beweglichen Anbringung der Sensoreinheiten 9 an den Portalstützen 6d auch für alle weiteren in dieser Anmeldung beschriebenen Anwendungsszenarien möglich, insbesondere auch mit zwei vorderen und/oder hinteren Sensoreinheiten 9.

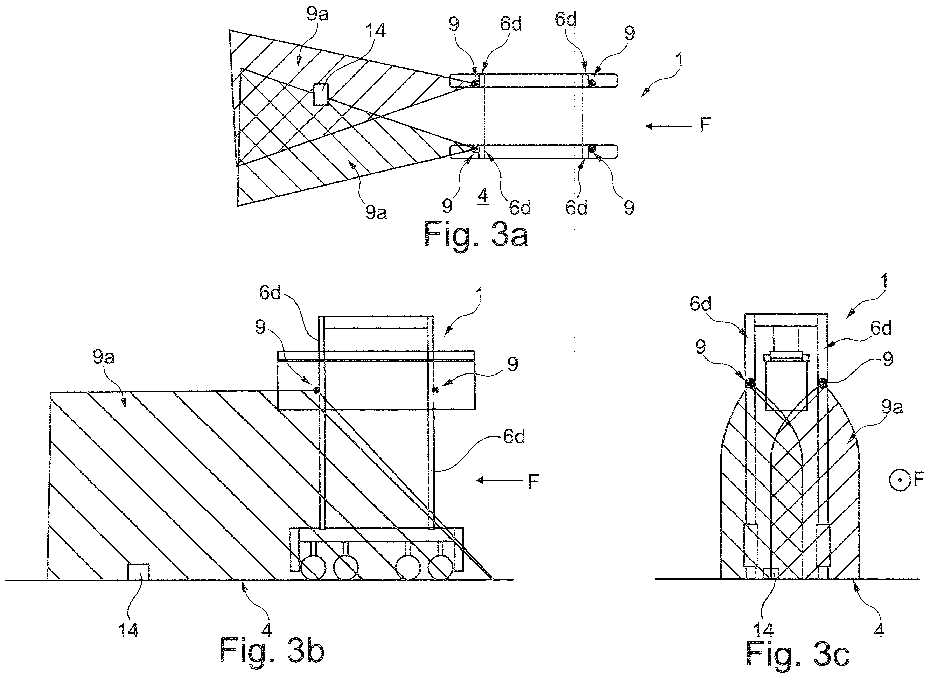

Eine weitere Möglichkeit zum Einsatz des Sensorsystems zum Kollisionsschutz ist in den Figuren 3a bis 3c dargestellt. Hier können außer den vorgenannten zu engen Gassen im Containerlager 2c auch andere im Fahrbereich des Portalhubgeräts 1 befindliche Hindernisse 14 vermessen und erkannt werden. Das Portalhubgerät 1 ist in Figur 3a ohne Spreader 10 dargestellt. Die Vermessung einschließlich Abstandsmessung erfolgt zumindest durch die in Fahrtrichtung F gesehen vorderen beiden Sensoreinheiten 9 des Sensorsystems oder auch durch alle vier Sensoreinheiten 9. Im Falle eines erkannten Hindernisses 14, kann dieses automatisch umfahren werden oder ein Halt des Portalhubgeräts 1 veranlasst werden, um eine Kollision mit dem Hindernis 14 zu vermeiden. Das Hindernis 14 kann wie in den Figuren 3a bis 3c dargestellt ein Objekt sein, das sich innerhalb oder außerhalb des Containerlagers 2c im Fahrbereich und insbesondere auf einer von dem Leitsystem vorgegebenen Soll-Route des Portalhubgeräts 1 beispielsweise auf der Flurfläche 4 befindet. In diesen Fällen kann das Hindernis 14 beispielsweise die Begrenzung einer Fahrspur oder ein anderer Gegenstand sein, der unbeabsichtigt den Fahrbereich beeinträchtigt oder blockiert. Mittels des Rechners 12 und/oder des Leitsystems kann automatisiert entschieden werden, ob ein kollisionsfreies Umfahren des Hindernisses 14 über eine geänderte Soll-Route entlang von neu vorgegebenen Zwischenpositionen und insbesondere ohne Beeinträchtigung anderer Portalhubgeräte 1 und deren Soll-Routen möglich ist. Falls nicht, wird hier ebenso wie im obigen Fall zu enger Gassen des Containerlagers 2c ein Halt mit entsprechender Rückmeldung an das Leitsystem veranlasst. Zu diesem Zweck stehen dem Leitsystem und/oder dem hiermit verbundenen Rechner 12 die Abmessungen der jeweiligen Portalhubgeräte 1 zur Verfügung, auf deren Basis dann ein Vergleich mit den Sensordaten beziehungsweise den hieraus gewonnenen Informationen über die vermessenen und erkannten Objekte erfolgen kann und anschließend entschieden werden kann, ob das Portalhubgerät 1 kollisionsfrei entlang der ursprünglichen oder einer abgeänderten Soll-Route weiter verfahren kann.

Auch das in den Figuren 4a bis 4c dargestellte Entladen eines Portalhubgeräts 1 durch Absetzen des vom Portalhubgerät 1 beziehungsweise dessen Spreader 10 aufgenommenen Containers 2 auf die Ladefläche 15a eines Lastkraftwagens 15 kann unter Einsatz des Sensorsystems erfolgen. Hierzu fährt das Portalhubgerät 1 mit dem Container 2 in eine vorgegebene vorläufige Zielposition. Die Zielposition ist einem Übergabeplatz im Umschlagbereich 13 zugeordnet und so gewählt, dass sich die Ladefläche 15a eines auf den Übergabeplatz rangierten Lastkraftwagens 15 zwischen den Fahrwerkträgern 5 und der Container 2 über der Ladefläche 15a befindet. Die Ladefläche 15a ist üblicherweise auf einem Anhänger des Lastkraftwagens 15 angeordnet und mit Twistlocks 15b versehen. Hier wird das Sensorsystem ebenfalls zum Kollisionsschutz und insbesondere für die Feinpositionierung des Portalhubgeräts 1 und des Spreaders 10 beim Absetzen des Containers 2 auf der Ladefläche 15a und den dortigen Twistlocks 15b eingesetzt. In diesem Zusammenhang können dem Rechner 12 von dem Leitsystem auch Auftragsdaten für die vorzunehmende Vermessung und Feinpositionierung vorgegeben werden. Mögliche Auftragsdaten können die Information beinhalten, dass die gewünschte Abstellposition auf der Ladefläche 15a vorne oder hinten ist, insbesondere wenn es sich um einen Container 2a mit einer Länge von 20 Fuß handelt und auf der Ladefläche 15a zwei Container 2a abgestellt werden können. Mittels des Sensorsystems erfolgt dann mittels der zumindest zwei Sensoreinheiten 9, insbesondere mittels aller vier Sensoreinheiten 9, eine Vermessung der Ladefläche 15a und der Twistlocks 15b. Die Vermessung kann auch im obigen Sinne redundant erfolgen, indem zumindest einzelne Twistlocks 15b gezielt von zumindest zwei sich überlappenden Sichtfeldern 9a der mindestens zwei Sensoreinheiten 9 erfasst und vermessen werden (siehe insbesondere Figur 4b). Die Blickrichtungen beziehungsweise Sichtfelder 9a der jeweiligen Sensoreinheiten 9 können hierfür entsprechend verstellt und angepasst werden. Hierbei können sowohl die Länge der Ladefläche 15a als auch die Positionen der Twistlocks 15b unter Berücksichtigung etwaiger Auftragsdaten ermittelt werden. Auf Grundlage dieser Objektvermessung und dabei erfolgender Abstandsmessung kann mittels des Rechners 12 und/oder des Leitsystems die Zielposition des Portalhubgeräts 1 und des Spreaders 10 für ein möglichst genaues Absetzen eventuell angepasst werden, so dass der Container 2 beziehungsweise dessen Beschläge nach dem Absetzen des Containers 2 auf der Ladefläche 15a mittels der dann in die Beschläge eingreifenden Twistlocks 15b auf der Ladefläche 15a verriegelt werden können. Es lassen sich also Belade- und Entladepositionen von Containern 2 auf den Ladeflächen 15a erkennen und automatisch ansteuern.

In den Figuren 5a bis 5c ist eine alternative Ausführungsform des Sensorsystems im Zusammenhang mit dem Absetzen eines Containers 2 auf der Ladefläche 15a eines Lastkraftwagens 15 dargestellt. Hierbei umfasst das Sensorsystem zusätzlich zu den an den vier Portalstützen 6d angebrachten Sensoreinheiten 9 und deren optionalen Kameras vier Spreader-Kameras 10a. Die Spreader-Kameras 10a sind am Spreader 10 befestigt und können gemeinsam mit diesem in beziehungsweise entgegen der Hubrichtung H gehoben beziehungsweise gesenkt werden. Jeweils eine dieser Spreader-Kameras 10a ist an einem Eckbereich des Spreaders 10 angeordnet, um Sensordaten von einer Umgebung des Portalhubgeräts 1 und insbesondere des Spreaders 10 zu ermitteln. Hierbei ist jeder Eckbereich des Spreaders 10 einer oberen Containerecke eines aufzunehmenden oder bereits aufgenommenen Containers 2 zugeordnet. Wenn der Spreader 10 teleskopierbar ist, können die Spreader-Kameras 10a daher auch bezüglich ihrer horizontalen Position einhergehend mit dem Teleskopieren des Spreaders 10 verstellt werden. Bei den Spreader-Kameras 10a handelt es sich wie bei den optionalen Kameras der Sensoreinheiten 9 vorzugsweise um digitale Foto- oder Videokameras, die als Sensordaten 2D-Daten ermitteln. Es können jedoch auch 3D-Kameras eingesetzt werden.

Die Spreader-Kameras 10a sind ebenfalls signalübertragend mit dem Rechner 12 verbunden (siehe Figur 6). Aufgrund der zusätzlich zu den mindestens zwei, vorzugsweise vier, Sensoreinheiten 9 vorgesehenen Spreader-Kameras 10a kann eine kombinierte beziehungsweise verkettete Objektvermessung und Objekterkennung erfolgen. Hierbei können dann mittels der Sensoreinheiten 9 und insbesondere deren 3D-Scannern und/oder Kameras die in den Sichtfeldern 9a befindlichen Objekte einschließlich des dortigen Spreaders 10 mit oder ohne Container 2 vermessen und erkannt werden, während mittels der am Spreader 10 angeordneten Spreader-Kameras 10a innerhalb ihrer schraffiert dargestellten Sichtfelder 10b die Umgebung unterhalb des Spreaders 10 beobachtet und dortige Objekte vermessen und erkannt werden können. Auch können dieselben Objekte sowohl mittels der Sensoreinheiten 9 als auch mittels der Spreader-Kameras 10a und somit redundant vermessen und erkannt werden. Die jeweiligen Auswerteergebnisse können somit auf Plausibilität geprüft werden und dadurch als kombiniertes Auswerteergebnis einen besonders sicheren Automatik-Betrieb ermöglichen. Die Sichtfelder 10b können in gleicher Weise wie die oben beschriebenen Sichtfelder 9a gezielt zumindest teilweise an dem im Spreader 10 aufgenommenen Container 2 vorbei in Richtung der Flurfläche 4 ausgerichtet werden und hierfür auch entsprechend beweglich sein. Dadurch ist eine Objektvermessung und Objekterkennung auch in Bereichen möglich, die beispielsweise von dem Spreader 10 und/oder dem daran befestigten Container 2 verdeckt werden und somit von den Sichtfeldern 9a der Sensoreinheiten 9 nicht erfasst werden können. Im Übrigen erfolgt die Objektvermessung und Objekterkennung bei dieser Ausführungsform analog zu den obigen Ausführungen.

Die alternative Ausführungsform lässt sich auch bei den vorbeschriebenen Anwendungsszenarien der Figuren 1a bis 1c, 2a bis 2c und 3a bis 3c zur Objektvermessung und insbesondere Objekterkennung einsetzen.

In den vorstehend beschriebenen Fällen beziehungsweise Anwendungsszenarien kommt also das in Figur 6 schematisch dargestellte Sensorsystem zur automatischen Steuerung des jeweiligen Portalhubgeräts 1 zum Einsatz, das den Rechner 12 umfasst, der mit den mindestens zwei, vorliegend vier, Sensoreinheiten 9 des Sensorsystems und der Fahrzeugsteuerung 11 des Portalhubgeräts 1 verbunden ist. Schematisch dargestellt sind in Figur 6 auch die optionalen Spreader-Kameras 10a, die parallel zu den Sensoreinheiten 9 signalübertragend mit dem Rechner 12 verbunden sein können, damit dieser nicht nur die Sensordaten der Sensoreinheiten 9, sondern auch die Sensordaten der Spreader-Kameras 10a zur Objekterkennung auswerten und auf Basis des kombinierten Auswerteergebnisses das automatische Ansteuern des jeweiligen Portalhubgeräts 1 über die Fahrzeugsteuerung 11 veranlassen kann.

Die vorbeschriebenen Funktionen des Sensorsystems zur Kollisionsvermeidung und Feinpositionierung stehen auch im Rahmen einer Leerfahrt ohne aufgenommenen Container 2 zur Verfügung, wenn ein Container 2 aus dem Containerlage 2c oder dem Umschlagbereich 13 abgeholt und von der Flurfläche 4, einem Containerstapel oder einer Ladefläche 15a aufgenommen werden soll. Die endgültigen Zielpositionen für das jeweilige Portalhubgerät 1 und den Spreader 10 lassen sich mittels des Sensorsystems in analoger Weise ermitteln und falls erforderlich ausgehend von vorläufigen Zielpositionen ändern.

Das Sensorsystem hat außerdem in jeder der vorbeschriebenen Varianten eine automatische Kalibriervorrichtung, mittels der sich die Sensoreinheiten 9 und die optional vorgesehenen Spreader-Kameras 10a an Referenzobjekten mit bekannten Formen, Mustern beziehungsweise Konturen sowie Abmessungen selbst kalibrieren können. Als Referenzobjekt kommen permanent vorhandene Strukturen des Portalhubgeräts 1 sowie alternativ oder zusätzlich Markierungselemente in Frage, die hierfür am Portalhubgerät 1 angebracht sind. Die Referenzobjekte sind hierbei vorzugsweise so angeordnet, dass sie im Sichtfeld 9a beziehungsweise 10b von mehreren oder allen Sensoreinheiten 9 beziehungsweise Spreader-Kameras 10a liegen. Die Markierungselemente können hierfür am Portalhubgerät 1 und insbesondere an dessen Fahrwerkträgern 5 angebracht werden, damit sie im jeweiligen Sichtfeld 9a beziehungsweise 10b liegen. Die Markierungselemente können jeweils die Form eines Quaders, Würfels, einer Pyramide oder eines Rings aufweisen und aus einem von den Sensoreinheiten 9 beziehungsweise den Spreader-Kameras 10a gut detektierbaren Material wie beispielsweise Stahlblech oder Kunststoff hergestellt sein. Die Größenordnungen der Markierungselemente sind vorzugsweise größer als diejenigen der Twistlocks.

### Bezugszeichenliste

- 1: Portalhubgerät
- 1a: Seil
- 2: Container
- 2a: Container mit einer Länge von 20 Fuß
- 2b: Container mit einer Länge von 40 oder 45 Fuß
- 3: Rad
- 4: Flurfläche
- 5: Fahrwerkträger
- 6a: erster Portalrahmen
- 6b: zweiter Portalrahmen
- 6c: Portalträger
- 6d: Portalstütze
- 7: Längsträger
- 8: Oberrahmen
- 8a: Maschinenplattform
- 9: Sensoreinheit
- 9a: Sichtfeld
- 10: Spreader
- 10a: Spreader-Kamera
- 10b: Sichtfeld
- 11: Fahrzeugsteuerung
- 12: Rechner
- 13: Umschlagbereich
- 14: Hindernis
- 15: Lastkraftwagen
- 15a: Ladefläche
- 15b: Twistlock

- F: Fahrtrichtung
- H: Hubrichtung

## Patentansprüche

1. Portalhubgerät (1) für Container (2), insbesondere nach Art eines Straddle Carriers oder Sprinter Carriers, das vier voneinander beabstandet angeordnete Portalstützen (6d) aufweist und über seine Räder (3) flurgebunden und frei verfahrbar ist, mit einer Fahrzeugsteuerung (11), über die das Portalhubgerät (1) automatisch steuerbar und vollautomatisch als AGV betreibbar ist, **dadurch gekennzeichnet, dass** im Automatik-Betrieb sämtliche Manöver des Portalhubgeräts (1) automatisch steuerbar sind, indem Transportaufträge ausgeführt und diesbezüglich vorgegebene Routen steuerungstechnisch in entsprechende Manöver innerhalb eines Terminals zum Umschlag von Containern (2) umgesetzt werden, und mit einem Sensorsystem, das ausgebildet und eingerichtet ist, um zur automatischen Steuerung des Portalhubgeräts (1) Sensordaten von einer Umgebung des Portalhubgeräts (1) zu ermitteln, wobei das Sensorsystem mindestens zwei, vorzugsweise vier, Sensoreinheiten (9) zur berührungslosen Objektvermessung und Objekterkennung umfasst, von denen jeweils eine Sensoreinheit (9) an einer der vier Portalstützen (6d) angeordnet und eingerichtet ist, um zur Objektvermessung und Objekterkennung Sensordaten von einer Umgebung des Portalhubgeräts (1) zu ermitteln.

2. Portalhubgerät (1) nach Anspruch 1, **dadurch gekennzeichnet, dass** jede der Sensoreinheiten (9) einen 3D-Scanner, insbesondere einen Laser-Scanner, und/oder eine Kamera, umfasst.

3. Portalhubgerät (1) nach einem der vorherigen Ansprüche, **dadurch gekennzeichnet, dass** die Sensoreinheiten (9) jeweils eine bewegliche, insbesondere rotatorisch und/oder translatorisch bewegliche, Blickrichtung aufweisen.

4. Portalhubgerät (1) nach einem der vorherigen Ansprüche, **dadurch gekennzeichnet, dass** die Sensoreinheiten (9) jeweils beweglich, insbesondere rotatorisch und/oder translatorisch beweglich, an dem Portalhubgerät (1) und insbesondere der jeweiligen Portalstütze (6d) angebracht sind.

5. Portalhubgerät (1) nach einem der vorherigen Ansprüche, **dadurch gekennzeichnet, dass** das Sensorsystem zusätzlich vier Spreader-Kameras (10a) umfasst, von denen jeweils eine Spreader-Kamera (10a) in einem Eckbereich eines Spreaders (10) des Portalhubgeräts (1) angeordnet ist, um Sensordaten von einer Umgebung des Portalhubgeräts (1) und insbesondere des Spreaders (10) zu ermitteln.

6. Portalhubgerät (1) nach einem der vorherigen Ansprüche, **dadurch gekennzeichnet, dass** das Sensorsystem eine automatische Kalibriervorrichtung umfasst, mittels der sich die Sensoreinheiten (9) und die etwaigen Spreader-Kameras (10a) an Referenzobjekten, insbesondere an Markierungselementen, die am Portalhubgerät (1) angebracht sind, selbst kalibrieren können.

7. Portalhubgerät (1) nach einem der vorherigen Ansprüche, **dadurch gekennzeichnet, dass** das Sensorsystem einen mit den Sensoreinheiten (9) und der Fahrzeugsteuerung (11) verbundenen Rechner (12) umfasst, um Sensordaten des Sensorsystems auszuwerten und hierbei auf Basis der ermittelten Sensordaten eine Objekterkennung durchzuführen sowie auf Basis des Auswerteergebnisses das Portalhubgerät (1) automatisch zu steuern.

8. Verfahren zum Betrieb eines Portalhubgeräts (1) für Container (2), insbesondere nach Art eines Straddle Carriers oder Sprinter Carriers, das vier voneinander beabstandet angeordnete Portalstützen (6d) aufweist und über seine Räder (3) flurgebunden und frei verfahrbar ist, mit einer Fahrzeugsteuerung (11), über die das Portalhubgerät (1) automatisch gesteuert und vollautomatisch als AGV betrieben wird, **dadurch gekennzeichnet, dass** im Automatik-Betrieb sämtliche Manöver des Portalhubgeräts (1) automatisch steuerbar sind, indem Transportaufträge ausgeführt und diesbezüglich vorgegebene Routen steuerungstechnisch in entsprechende Manöver innerhalb eines Terminals zum Umschlag von Containern (2) umgesetzt werden, und mit einem Sensorsystem, das ausgebildet und eingerichtet ist, um zur automatischen Steuerung des Portalhubgeräts (1) Sensordaten von einer Umgebung des Portalhubgeräts (1) zu ermitteln, wobei das Sensorsystem mindestens zwei, vorzugsweise vier, Sensoreinheiten (9) zur berührungslosen Objektvermessung und Objekterkennung umfasst, von denen jeweils eine Sensoreinheit (9) an einer der vier Portalstützen (6d) angeordnet ist und zur Objektvermessung und Objekterkennung Sensordaten von einer Umgebung des Portalhubgeräts (1) ermittelt.

9. Verfahren nach Anspruch 8, **dadurch gekennzeichnet, dass** bei der Ermittlung der Sensordaten Blickrichtungen der Sensoreinheiten (9) und etwaiger Spreader-Kameras (10a) des Sensorsystems bewegt werden.

10. Verfahren nach einem der vorherigen Ansprüche, **dadurch gekennzeichnet, dass** das Sensorsystem eine automatische Kalibriervorrichtung umfasst, mittels der sich die Sensoreinheiten (9) und die etwaigen Spreader-Kameras (10a) an Referenzobjekten, insbesondere an Markierungselementen, die am Portalhubgerät (1) angebracht sind, selbst kalibrieren.

11. Verfahren nach einem der vorherigen Ansprüche, **dadurch gekennzeichnet, dass** die ermittelten Sensordaten ausgewertet werden und hierbei auf Basis der ermittelten Sensordaten eine Objekterkennung durchgeführt wird sowie auf Basis des Auswerteergebnisses das Portalhubgerät (1) automatisch gesteuert wird.

## Claims

1. Gantry lift device (1) for containers (2), in particular in the manner of a straddle carrier or sprinter carrier, which comprises four mutually spaced apart gantry struts (6d) and can travel freely and in a floor-bound manner via its wheels (3), having a vehicle controller (11), via which the gantry lift device (1) can be automatically controlled and can be operated in a fully automated manner as an AGV, **characterised in that** in the automated operation all of the manoeuvres of the gantry lift device (1) can be automatically controlled, **in that** transport orders are executed and routes which are specified in this respect are converted by control technology into corresponding manoeuvres within a terminal for handling containers (2), and having a sensor system which is configured and designed to determine sensor data of a surrounding area of the gantry lift device (1) in order to automatically control the gantry lift device (1), wherein the sensor system comprises at least two, preferably four, sensor units (9) for contactless object measurement and object recognition, of which one sensor unit (9) is arranged on each one of the four gantry struts (6d) and is designed to determine sensor data of a surrounding area of the gantry lift device (1) for object measurement and object recognition.

2. Gantry lift device (1) as claimed in claim 1, **characterised in that** each of the sensor units (9) comprises a 3D scanner, in particular a laser scanner, and/or a camera.

3. Gantry lift device (1) as claimed in any one of the preceding claims, **characterised in that** the sensor units (9) each have a movable viewing direction, in particular a viewing direction which is movable in rotation and/or in translation.

4. Gantry lift device (1) as claimed in any one of the preceding claims, **characterised in that** the sensor units (9) are attached in each case to the gantry lift device (1) and in particular the respective gantry strut (6d) so as to be movable, in particular movable in rotation and/or in translation.

5. Gantry lift device (1) as claimed in any one of the preceding claims, **characterised in that** the sensor system additionally includes four spreader cameras (10a), of which each spreader camera (10a) is arranged in a corner region of a spreader (10) of the gantry lift device (1) in order to determine sensor data of a surrounding area of the gantry lift device (1) and in particular the spreader (10).

6. Gantry lift device (1) as claimed in any one of the preceding claims, **characterised in that** the sensor system includes an automatic calibration device, by means of which the sensor units (9) and any spreader cameras (10a) can be automatically calibrated to reference objects, in particular to marking elements which are attached to the gantry lift device (1).

7. Gantry lift device (1) as claimed in any one of the preceding claims, **characterised in that** the sensor system includes a computer (12) connected to the sensor units (9) and the vehicle controller (11), in order to evaluate sensor data of the sensor system and to perform object recognition on the basis of the determined sensor data and to automatically control the gantry lift device (1) on the basis of the evaluation result.

8. Method for operating a gantry lift device (1) for containers (2), in particular in the manner of a straddle carrier or sprinter carrier, which comprises four mutually spaced apart gantry struts (6d) and can travel freely and in a floor-bound manner via its wheels (3), having a vehicle controller (11), via which the gantry lift device (1) is automatically controlled and is operated in a fully automated manner as an AGV, **characterised in that** in the automated operation all of the manoeuvres of the gantry lift device (1) can be automatically controlled, **in that** transport orders are executed and routes which are specified in this respect are converted by control technology into corresponding manoeuvres within a terminal for handling containers (2), and having a sensor system which is configured and designed to determine sensor data of a surrounding area of the gantry lift device (1) in order to automatically control the gantry lift device (1), wherein the sensor system comprises at least two, preferably four, sensor units (9) for contactless object measurement and object recognition, of which one sensor unit (9) is arranged on each one of the four gantry struts (6d) and determines sensor data of a surrounding area of the gantry lift device (1) for object measurement and object recognition.

9. Method as claimed in claim 8, **characterised in that**, when determining the sensor data, viewing directions of the sensor units (9) and any spreader cameras (10a) of the sensor system are moved.

10. Method as claimed in any one of the preceding claims, **characterised in that** the sensor system includes an automatic calibration device, by means of which the sensor units (9) and any spreader cameras (10a) are automatically calibrated to reference objects, in particular to marking elements which are attached to the gantry lift device (1).

11. Method as claimed in any one of the preceding claims, **characterised in that** the determined sensor data are evaluated and object recognition is performed on the basis of the determined sensor data and the gantry lift device (1) is automatically controlled on the basis of the evaluation result.

## Revendications

1. Dispositif de levage à portique (1) destiné à des conteneurs (2), et se présentant en particulier sous la forme de chariot cavalier élévateur non gerbeur ou d'un pont roulant, qui comporte quatre supports de portique (6d) disposés à distance les uns des autres et qui peut être déplacé librement et en étant lié au sol par le biais de ses roues (3), ledit dispositif comprenant une commande de véhicule (11) permettant de commander automatiquement le dispositif de levage à portique (1) et de l'actionner de manière entièrement automatique comme un véhicule à guidage automatique (VGA), **caractérisé en ce que**, en mode automatique, toutes les manœuvres du dispositif de levage à portique (1) peuvent être commandées automatiquement par exécution d'ordres de transport et par conversion des itinéraires prédéfinis en manœuvres correspondantes dans un terminal de manutention de conteneurs (2) par une technique de commande, et comprenant un système de capteurs qui est conçu et adapté pour déterminer des données de capteur à partir de l'environnement du dispositif de levage à portique (1) afin de commander automatiquement le dispositif de levage à portique (1), le système de capteurs comprenant au moins deux, de préférence quatre, unités formant capteurs (9) destinées à la mesure d'objets sans contact et à la reconnaissance d'objets, dont une unité formant capteur (9) est disposée sur l'un des quatre supports de portique (6d) et adaptée pour déterminer des données de capteur à partir de l'environnement du dispositif de levage à portique (1) afin de mesures des objets et de reconnaître des objets.

2. Dispositif de levage à portique (1) selon la revendication 1, **caractérisé en ce que** chacune des unités formant capteur (9) comprend un scanner 3D, notamment un scanner à laser, et/ou une caméra.

3. Dispositif de levage à portique (1) selon l'une des revendications précédentes, **caractérisé en ce que** les unités formant capteur (9) présentent chacune une direction d'observation mobile, notamment mobile en rotation et/ou en translation.

4. Dispositif de levage à portique (1) selon l'une des revendications précédentes, **caractérisé en ce que** les unités formant capteur (9) sont chacune fixées au dispositif de levage à portique (1) et notamment au support de portique respectif (6d) de manière mobile, notamment mobile en rotation et/ou en translation.

5. Dispositif de levage à portique (1) selon l'une des revendications précédentes, **caractérisé en ce que** le système de capteurs comprend en outre quatre caméras de palonnier de levage (10a), dont une caméra de palonnier de levage (10a) est disposée dans une zone d'angle d'un palonnier de levage (10) du dispositif de levage à portique (1) pour déterminer des données de capteur à partir de l'environnement du dispositif de levage à portique (1) et en particulier du palonnier de levage (10).

6. Dispositif de levage à portique (1) selon l'une des revendications précédentes, **caractérisé en ce que** le système de capteurs comprend un dispositif d'étalonnage automatique permettant d'étalonner lui-même les unités formant capteurs (9) et d'éventuelles caméras de palonnier de levage (10a) sur des objets de référence, en particulier sur des éléments de marquage qui sont placés sur le dispositif de levage à portique (1).

7. Dispositif de levage à portique (1) selon l'une des revendications précédentes, **caractérisé en ce que** le système de capteurs comprend un calculateur (12) relié aux unités formant capteurs (9) et à la commande de véhicule (11) pour évaluer des données de capteur du système de capteurs et pour effectuer ici sur la base des données de capteur déterminées une reconnaissance d'objet et commander automatiquement le dispositif de levage à portique (1) sur la base du résultat de l'évaluation.

8. Procédé de fonctionnement d'un dispositif de levage à portique (1) destiné à des conteneurs (2), et se présentant en particulier sous la forme de chariot cavalier élévateur non gerbeur ou d'un pont roulant, qui comporte quatre supports de portique (6d) disposés à distance les uns des autres et qui peut être déplacé librement et en étant lié au sol par le biais de ses roues (3), ledit dispositif comprenant une commande de véhicule (11) permettant de commander automatiquement le dispositif de levage à portique (1) et de l'actionner de manière entièrement automatique comme un véhicule à guidage automatique (VGA), **caractérisé en ce que**, en mode automatique, toutes les manœuvres du dispositif de levage à portique (1) peuvent être commandées automatiquement par exécution d'ordres de transport et par conversion des itinéraires prédéfinis en manœuvres correspondantes dans un terminal de manutention de conteneurs (2) par une technique de commande, et comprenant un système de capteurs qui est conçu et adapté pour déterminer des données de capteur à partir de l'environnement du dispositif de levage à portique (1) afin de commander automatiquement le dispositif de levage à portique (1), le système de capteurs comprenant au moins deux, de préférence quatre, unités formant capteurs (9) destinées à la mesure d'objets sans contact et à la reconnaissance d'objets, dont une unité formant capteur (9) est disposée sur l'un des quatre supports de portique (6d) et adaptée pour déterminer des données de capteur à partir de l'environnement du dispositif de levage à portique (1) afin de mesures des objets et de reconnaître des objets.

9. Procédé selon la revendication 8, **caractérisé en ce que** les directions d'observation des unités formant capteurs (9) et d'éventuelles caméras de palonnier de levage (10a) du système de capteur sont déplacées lors de la détermination des données de capteur.

10. Procédé selon l'une des revendications précédentes, **caractérisé en ce que** le système de capteurs comprend un dispositif d'étalonnage automatique permettant d'étalonner lui-même les unités formant capteurs (9) et d'éventuelles caméras de palonnier de levage (10a) sur des objets de référence, en particulier sur des éléments de marquage placés sur le dispositif de levage à portique (1).

11. Procédé selon l'une des revendications précédentes, **caractérisé en ce que** les données de capteur déterminées sont évaluées et une reconnaissance d'objet est effectuée sur la base des données de capteur déterminées et le dispositif de levage à portique (1) est commandé automatiquement sur la base du résultat de l'évaluation.
